# EUROPÄISCHE PATENTSCHRIFT

(11) **EP 0 926 046 B1**
(45) Veröffentlichungstag und Bekanntmachung des Hinweises auf die Patenterteilung: **12.06.2002**
(21) Anmeldenummer: 98123354.7
(22) Anmeldetag: 08.12.1998
(51) Int. Cl.: B62D 9/00

(54) **Lenkeingabevorrichtung für Fahrzeuge**
Steer input device for vehicles
Dispositif d'entrée d'un angle de direction pour véhicules

(30) Priorität: 17.12.1997 US 991961
(43) Veröffentlichungstag der Anmeldung: 30.06.1999
(73) Patentinhaber: DEERE & COMPANY, Moline, Illinois 61265-8098 (US)
(72) Erfinder: Easton, David Joseph, Cedar Falls, Iowa 50613 (US)
(74) Vertreter: Lau-Loskill, Philipp, Dipl.-Phys.

(56) Entgegenhaltungen:
- EP-A- 0 497 409
- FR-A- 2 630 699
- GB-A- 292 755
- GB-A- 1 450 859
- US-A- 4 771 846

## Beschreibung

Die Erfindung betrifft eine Lenkeingabevorrichtung für ein Fahrzeug, insbesondere für ein landwirtschaftliches oder industrielles Fahrzeug, beispielsweise einen Ackerschlepper, gemäß den Merkmalen des Oberbegriffs des Patentanspruchs 1. Eine derartige Lenkeingabevorrichtung ist durch die GB-A-292,755 bekannt geworden.

Aus der US-A-4,771,846 geht ein Lenkmechanismus hervor, welcher ein Lenkgefühl in einem Lenksystem erzeugen soll, um ein Fahrzeug mit Lenkrädern zu steuern. Das Lenkgefühl wird durch eine elektromagnetische Reibbremse geliefert, die durch eine elektronische Steuereinheit in Abhängigkeit eines Lenkradpositionssensors und eines Positionssensors für ein gelenktes Rad gesteuert wird. Der Betrag der Reibkraft hängt von der Stärke des Elektromagneten ab und ist durch diese begrenzt. Die Drehung der Lenkradwelle wird mechanisch durch einen Zahnradmechanismus, welcher zwei Endanschläge aufweist, ausgehend von einer Mittelstellung auf 1 1/2 Drehungen in jede Richtung begrenzt. Desweiteren ist der Lenkradpositionssensor ein linearer potentiometerartiger Sensor, welcher den erfaßbaren Positionsbereich der Lenkradwelle begrenzt.

Die US-A-3,011,579 zeigt einen Lenkmechanismus, der in einem Lenksystem ein Lenkgefühl erzeugen soll, um ein Fahrzeug mit Lenkrädern zu steuern. Dieses System weist einen Gefühlsservomechanismus mit einem Hydraulikmotor auf, bei dem der Hydraulikmotor antriebsmäßig über eine Zahnradanordnung mit einer Lenkeingangswelle verbunden ist.

Es ist wünschenswert eine Lenkeingabevorrichtung bereitzustellen, bei der das Lenkgefühl nicht unmittelbar durch die Leistungsfähigkeit eines Elektromagneten begrenzt ist und bei der der Fühlmechanismus keinen Hydraulikmotor mit Zahnradanordnung erfordert.

Die der Erfindung zugrunde liegende Aufgabe wird darin gesehen, eine Lenkeingabevorrichtung der eingangs genannten Art anzugeben, bei der das Lenkgefühl nicht unmittelbar durch die Fähigkeiten eines Elektromagneten begrenzt ist und bei der der Fühlmechanismus keinen Hydraulikmotor mit Zahnradanordnung erfordert. Bei der Lenkeingabevorrichtung soll die Drehung der Lenkwelle nicht begrenzt sein, und hinsichtlich der Erfassung der Lenkwellenposition soll keine Bereichsbegrenzung vorliegen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor. Die Lösung bringt die aus der Aufgabenstellung resultierenden Vorteile mit sich.

Eine bevorzugte erfindungsgemäße Lenkeingabevorrichtung enthält ein feststehendes Gehäuse, eine Lenkeingangswelle, die sich durch eine Bedienungsperson relativ zum Gehäuse verdrehen läßt, eine drehfest auf der Eingangswelle befestigte Nabe, ein Reibelement, das mit der Nabe in reibendem Eingriff steht, ein bewegliches Federelement, durch das das Reibelement in Eingriff mit der Nabe gehalten wird, einen beweglichen Sperring, der zahneingriffsmäßig mit dem Reibelement gekoppelt ist, und einen Elektromagneten. Durch das Erregen des Elektromagneten wird der Sperring in Zahneingriff mit dem Gehäuse gebracht, so daß die Verdrehung des Reibelements begrenzt wird. Der Reibeingriff des Reibelements mit der sich drehenden Nabe erzeugt eine Reibkraft, die eine Drehung der Nabe sowie der Eingangswelle erschwert. Die Größe dieser Reibkraft hängt von der Vorspannung des Federelements ab und ist nicht durch die Stärke des Elektromagneten begrenzt. Zu dem Gehäuse werden auch Bauteile gezählt, die mit diesem drehfest verbunden sind, wie beispielsweise eine Abdeckkappe.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Querschnittdarstellung einer erfindungsgemäßen Lenkeingabevorrichtung,
- Fig. 2: die Querschnittsdarstellung eines in der vorliegenden Erfindung verwendbaren Konuselements,
- Fig. 3: die Endansicht des Konuselements gemäß Fig. 2,
- Fig. 4: die Querschnittsdarstellung eines in der vorliegenden Erfindung verwendbaren Sperrings,
- Fig. 5: die Endansicht des Sperrings gemäß Fig. 4,
- Fig. 6: die Endansicht einer in der vorliegenden Erfindung verwendbaren Tellerfeder,
- Fig. 7: die Endansicht einer in der vorliegenden Erfindung verwendbaren Rückstellfeder und
- Fig. 8: eine Teilschnittansicht, bei der der Schnitt entlang der Linie 8-8 der Fig. 1 verläuft.

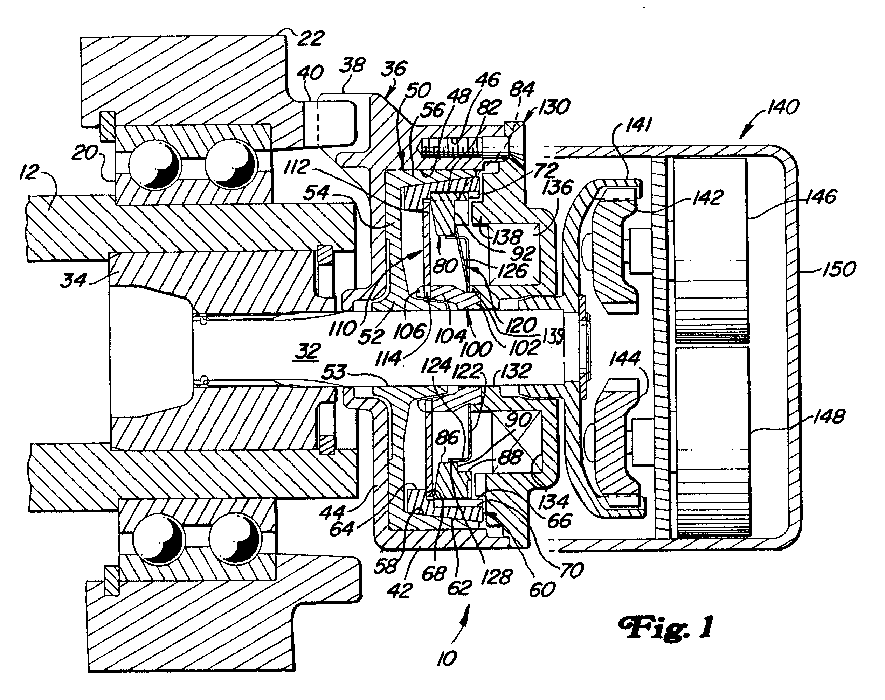

Aus Fig. 1 geht eine Lenkeingabevorrichtung 10 hervor, die eine konventionelle Lenkeingabewelle 12 enthält, welche mit einem üblichen, nicht dargestellten Lenkrad in Verbindung steht und welche durch Lager 20 in einem am nicht näher dargestellten Fahrzeugrahmen befestigten Lenksäulengehäuses 22 drehbar gehalten wird. Die Lenkeingabevorrichtung 10 enthält eine Welle 32, die über eine Keilverzahnung mit einem Wellengehäuseendstück 34 der Lenkeingangswelle 12 verbunden ist, wobei das Wellengehäuseendstück 34 durch einen Preßsitz auf der Lenkeingangswelle 12 sitzt. Auf der Welle 32 ist ein unmagnetisches Gehäuse 36 montiert, welches einen Vorsprung 38 aufweist, der von einem in dem Lenksäulengehäuse 22 ausgebildeten Schlitz 40 aufgenommen wird, so daß das unmagnetische Gehäuse 36 drehgesichert ist. Das unmagnetische Gehäuse 36 weist eine im wesentlichen zylindrische Außentrommel 42 auf, die sich ausgehend von dem äußeren Bereich einer ringförmigen Scheibe 44 in axialer Richtung erstreckt. In der Außentrommel 42 befinden sich mehrere zueinander beabstandete, axiale Befestigungssackbohrungen 46. In dem Gehäuse 36 ist eine Ausnehmung oder Ausdrehung 48 ausgebildet, die sich in zur Lenkeingangswelle 12 entgegengesetzten Richtung öffnet und durch die sich die Welle 32 erstreckt.

Von der Ausdrehung 48 wird ein Nabenelement 50 drehbar und gleitbar aufgenommen. Das Nabenelement 50 enthält eine hohle zylindrische Nabe 52, durch die sich eine Bohrung 53 erstreckt, in der die Welle 32 starr befestigt ist. Das Nabenelement 50 enthält desweiteren eine ringförmige Scheibe 54, die sich ausgehend von der Nabe 52 radial nach außen erstreckt, sowie eine hohle zylindrische Trommel 56, die sich an den äußeren Bereich der Scheibe 54 anschließt und sich axial erstreckt. Die Dicke der Trommel 56 nimmt von einem dickeren Bereich in der Nähe der Scheibe 54 zu einem dünneren Endbereich ab, so daß die Innenfläche 58 der Trommel 56 eine kegelförmige Fläche darstellt. Um sicherzustellen, daß sich Schmieröl zwischen dem Gehäuse 36 und dem Nabenelement 50 gut verteilen kann, können in die radial äußere Fläche der Trommel 56 sowie in die äußere, zum Gehäuse 36 weisenden Fläche der Scheibe 54 Nuten eingelassen sein.

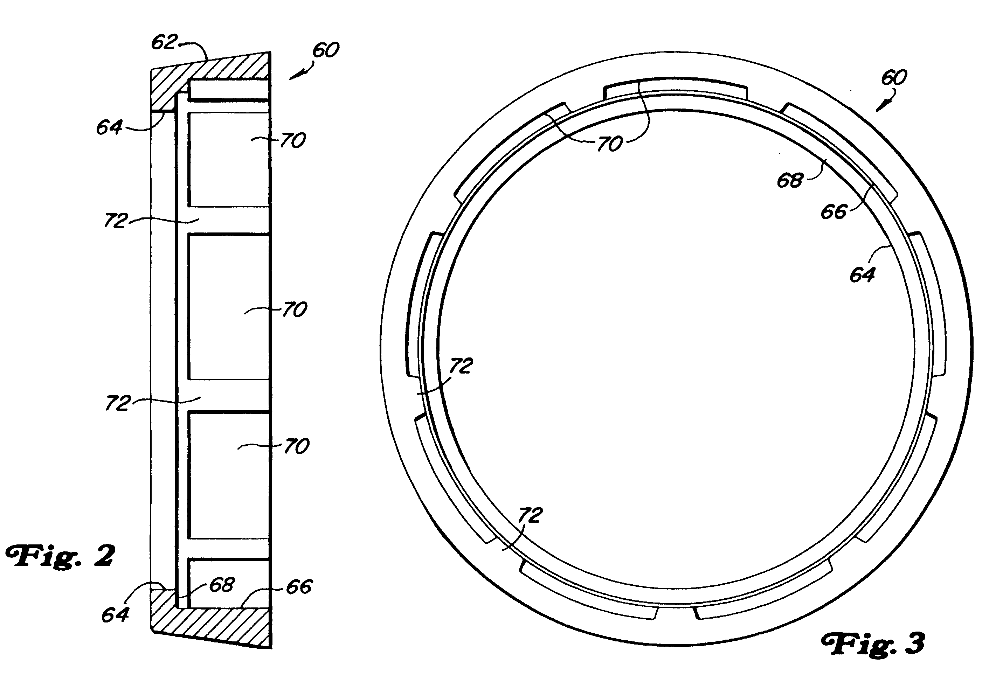

Ein hohles unmagnetisches Konus- oder Reibelement 60, wie es aus den Figuren 1, 2 und 3 hervorgeht, wird von dem Nabenelement 50 innerhalb dessen Ausdrehung 48 aufgenommen. Das Konuselement 60 weist eine kegelförmige Außenfläche auf, die an die kegelförmige Innenfläche 58 des Nabenelements 50 angepaßt ist und mit dieser in Eingriff steht, und die sich in Richtung der Lenkeingangswelle 12 zu einem Endbereich mit kleinem Durchmesser verjüngt. Die innere Oberfläche des Konuselements 60 bildet eine Zylinderfläche 64 kleineren Durchmessers, die über eine ringförmige Wandung 68, die von der Lenkeingangswelle 12 weg weist, in eine Zylinderfläche 66 größeren Durchmessers übergeht. In die Zylinderfläche 66 sind mehrere Ausnehmungen 70 eingelassen, durch die mehrere Vorsprünge 72 abgegrenzt werden, welche sich axial von der Wandung 68 weg und radial nach innen erstrecken.

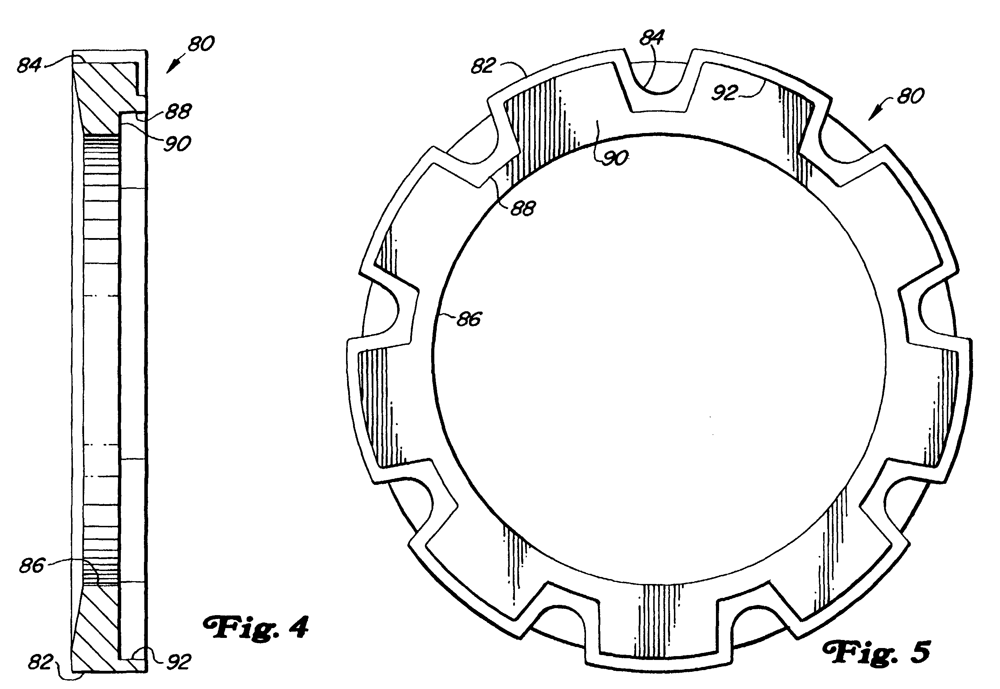

Innerhalb der Ausdrehung 48 des Konuselements 60 befindet sich auch ein hohler ferromagnetischer Sperring 80, auch Kupplungselement genannt, wie er aus den Figuren 1, 4 und 5 hervorgeht. Der Sperring 80 weist eine zylindrische Außenfläche 82 auf, in der mehrere sich axial erstreckende Schlitze 84 eingelassen sind, die zahneingriffsmäßig die Vorsprünge 72 des Konuselements 60 aufnehmen, so daß der Sperring 80 durch Zahneingriff, jedoch axial verschiebbar mit dem Konuselement 60 gekuppelt ist. Die innere Fläche des Sperrings 80 bildet eine Zylinderfläche 86 kleineren Durchmessers, die über eine ringförmige Wandung 90, die von der Lenkeingangswelle 12 weg weist, in eine Zylinderfläche 88 größeren Durchmessers übergeht. In die größere Zylinderfläche 88 sind mehrere Ausnehmungen 92 eingelassen, die sich radial nach innen und axial von der Lenkeingangswelle 12 weg öffnen.

Ein im wesentlichen zylindrisches Tragstützlager 100 ist auf der Welle 32 drehbar gelagert. Das Tragstützlager 100 weist einen Basisbereich 102 kleineren Durchmessers und einen Abschnitt 104 größeren Durchmessers auf. Der Abschnitt 104 steht von dem Basisbereich 102 in Richtung Nabe 52 derart ab, daß er teilweise die Nabe 52 des Nabenelements 50 einschließt. Mehrere, beispielsweise vier, Vorsprünge 106 erstrecken sich von dem Ende des Abschnitts 104 im wesentlichen axial in Richtung des Nabenelements 50.

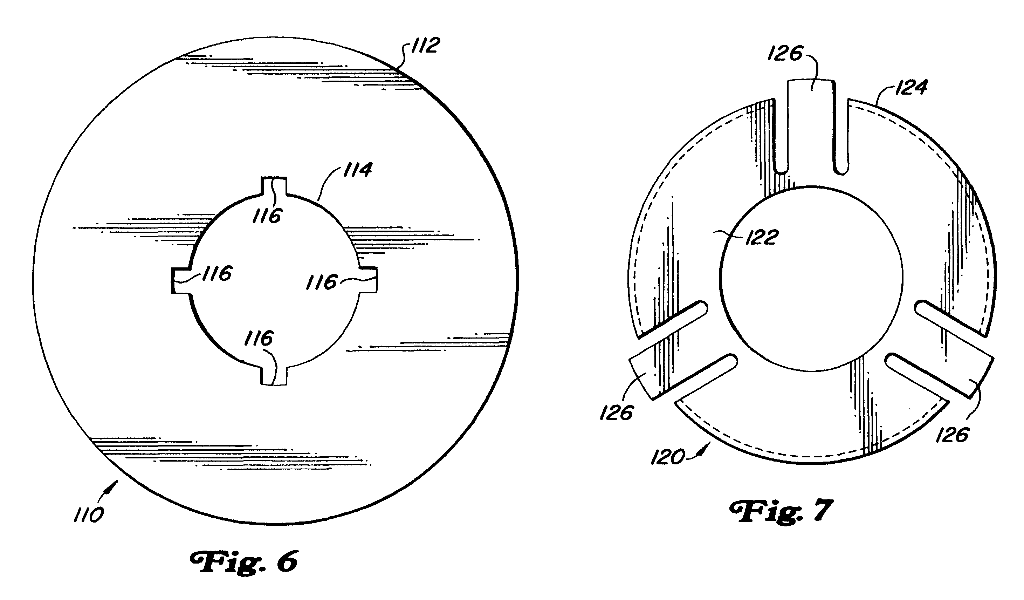

Eine ringförmige Tellerfeder 110, wie sie aus Fig. 1 und 6 hervorgeht, ist innerhalb der Ausdrehung 48 angeordnet und greift mit ihrem äußeren Rand 112 an der Wandung 68 des Konuselements 60 und mit ihrer radial innen liegenden Kante 114 an dem Abschnitt 104 des Tragstützlagers 100 an. Die innere Kante 114 enthält vier Schlitze 116, die die Vorsprünge 106 aufnehmen. Die Tellerfeder 110 ist in Richtung des Nabenelements 50 konkav ausgebildet. Sie bildet damit ein Federelement, welches vorgespannt ist, um das Konuselement 60 gegen das Nabenelement 50 zu drücken.

Innerhalb der Ausdrehung 48 ist auch eine ferromagnetische Rückstellfeder 120 angeordnet. Die Rückstellfeder 120 weist eine hohle ringförmige Scheibe 122, die drehbar von dem Tragstützlager 100 aufgenommen wird, und eine zylindrische Mantelfläche 124 auf, die axial von dem äußeren Rand der Scheibe 122 absteht. An mehreren, vorzugsweise drei, zueinander beabstandeten Stellen wurde von der Rückstellfeder 120 Material entfernt, so daß drei Finger 126 ausgebildet sind. Die Finger 126 erstrecken sich radial nach außen und sind in Richtung des Nabenelements 50 schräg abgewinkelt. Die äußeren Enden der Finger 126 greifen gleitend an der ringförmigen Wandung 90 des Sperrings 80 an. Die Mantelfläche 124 weist einen Endbereich 128 auf, der sich axial über die Finger 126 hinaus erstreckt und drehbar und gleitend an der Zylinderfläche 86 kleineren Durchmessers des Sperrings 86 anliegt.

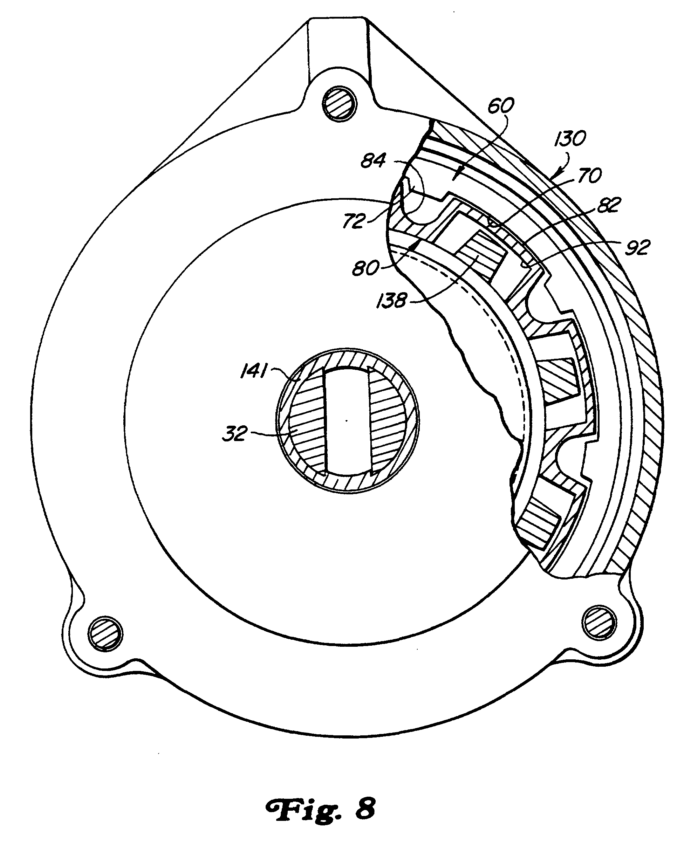

An dem Gehäuse 36 ist eine ferromagnetische Abdeckkappe 130, beispielsweise mittels in die Bohrungen 46 eingeschraubter Schrauben, befestigt. Durch die Abdeckkappe 130 erstreckt sich eine mittlere Bohrung 132, welche die Welle 32 drehbar aufnimmt. In der Abdeckkappe 130 ist eine ringförmige Ausnehmung oder Ausdrehung 134 ausgebildet, die sich in Richtung des Nabenelements 50 öffnet und in der eine elektromagnetische Spule 136 befestigt ist. An der Abdeckkappe 130 sind mehrere radial ausgerichtete Vorsprünge 138 ausgebildet, die axial in Richtung des Nabenelements 50 vorstehen und zueinander beabstandet in einer ringförmigen Anordnung rund um die äußere Kante der Ausdrehung angeordnet sind. Wie es am besten aus Fig. 8 hervorgeht, greifen die Vorsprünge 138 in die Ausnehmungen 92 des Sperrings 80 ein, so daß die Drehung des Sperrings 80 relativ zur Abdeckkappe 130 begrenzt wird. An der Abdeckkappe 130 ist auch ein ringförmiger Rand 139 angeformt, der sich axial in Richtung des Nabenelements 50 erstreckt, einen Bereich des Tragstützlagers 100 einschließt und an einem inneren Bereich der Rückstellfeder 120 anliegt.

Eine Meßwandlereinheit 140 erzeugt Signale in Abhängigkeit der Änderung der Position des nicht gezeigten Lenkrades und liefert die Signale an eine nicht näher dargestellte Steuereinheit. Die Meßwandlereinheit 140 enthält ein auf dem Ende der Welle 32 montiertes Ringrad 141, welches zwei Zahnräder 142, 144 antreibt. Die Zahnräder 142, 144 treiben je einen zugehörigen inkrementalen Drehencoder 146, 148 (wie beispielsweise käufliche OakGrigsby 900 Optical Encoder oder Grayhill Series 61H Encoder) an. Das Ringrad 141, die Zahnräder 142, 144 und die Encoder 146, 148 sind durch eine Abdeckung 150 geschützt.

### Wirkungsweise:

Beim Betrieb verdreht sich das Nabenelement 50 ständig mit der Welle 32. Wenn die Spule 136 nicht erregt ist, drehen sich das Konuselement 60 und der Sperring 80 ebenfalls mit der Welle 32 mit, weil der Sperring 80 nicht mit den Vorsprüngen 138 der Abdeckkappe 130 und damit mit dem Gehäuse 22 in Eingriff steht (wie es in Fig. 1 dargestellt ist).

Wenn die Spule 136 erregt ist, wird der Sperring 80 gegen die Kraft der Rückstellfeder 120 in Richtung Spule 136 gezogen, so daß die Vorsprünge 138 der Abdeckkappe 130 in die Ausnehmungen 92 des Sperrings 80 eingreifen, wodurch die Verdrehung des Sperrings 80 begrenzt wird. Wegen des Zahneingriffs zwischen den Schlitzen 84 des Sperrings 80 und den Vorsprüngen 72 des Konuselements 60 ist die Verdrehung des Konuselements 60 ebenfalls begrenzt. Weil die Außenfläche 62 des Konuselements 60 in reibendem Eingriff mit der Innenfläche 58 des Nabenelements 50 steht, wird die Kraft oder Leistung, die erforderlich ist, um die Welle 32 und die Lenkeingangswelle 12 zu verdrehen wesentlich erhöht. Die Größe dieser Reibkraft hängt von der Vorspannung der Tellerfeder 120 ab und ist nicht durch die Stärke des Elektromagneten 136 begrenzt. Der Sperring 80 läßt sich frei um einige Grade relativ zu dem Konuselement 60 verdrehen, wodurch ein einfacheres Auskuppeln möglich ist, wenn die Spule 136 aberregt wird. Es wird betont, daß die Welle 32 nicht federzentriert ist und sich in beide Richtungen unbegrenzt verdrehen läßt, auch wenn ihre Verdrehung durch eine große Reibkraft, die ihre Ursache in der Erregung der Spule 136 und dem Eingriff des Sperrings 80 mit den Vorsprüngen 138 hat, behindert wird.

## Patentansprüche

1. Lenkeingabevorrichtung für ein Fahrzeug mit einer durch eine Bedienungsperson relativ zu einem feststehenden Gehäuse (36, 130) verdrehbaren Lenkeingangswelle (12), auf der drehfest ein Nabenelement (50) befestigt ist, mit einem mit dem Nabenelement (50) in reibendem Eingriff stehenden Reibelement (60) und mit einem Federelement (110), welches das Reibelement (60) und das Nabenelement (50) in Reibeingriff miteinander drängt, **dadurch gekennzeichnet, daß** sich gewöhnlich das Reibelement (60) mit dem Nabenelement (50) mitdreht und daß die Lenkeingabe vorrichtung ein bewegliches Kupplungselement (80) aufweist, das sich wahlweise in formschlüssige Verbindung mit dem Reibelement (60) bringen läßt und durch das sich das Reibelement (60) mit dem Gehäuse (36, 130) verkuppeln oder entkuppeln läßt, und Mittel zum Bewegen des Kupplungselements (80) zwischen einer eingekuppelten Stellung und einer ausgekuppelten Stellung aufweist, wobei in der eingekuppelten Stellung die Verdrehung des Kupplungselements (80) und des Reibelements (60) relativ zum Gehäuse (36, 130) begrenzt wird.

2. Vorrichtung nach Anspruch 1, **dadurch gekennzeichnet, daß** das Federelement (110) ein die Lenkeingangswelle (12) einschließendes, im wesentlichen zylindrischen Teil enthält, das mit dem Reibelement (60) in Eingriff steht.

3. Vorrichtung nach Anspruch 1 oder 2, **dadurch gekennzeichnet, daß** ein drehbar auf der Lenkeingabewelle (12) montiertes Lagerelement (100) vorgesehen ist und daß das Federelement (110) mit einem radial inneren Bereich an dem Lagerelement (100) und mit einem radial äußeren Bereich an dem Reibelement (60) angreift.

4. Vorrichtung nach einem der Ansprüche 1 bis 3, **dadurch gekennzeichnet, daß** das Federelement (110) wenigstens eine ringförmige Belleville-Feder enthält.

5. Vorrichtung nach einem der Ansprüche 1 bis 4, **dadurch gekennzeichnet, daß** eine Rückstellfeder (120) vorgesehen ist, welche an dem Kupplungselement (80) angreift und dieses aus seiner mit dem Gehäuse (36, 130) eingekuppelten Stellung drängt.

6. Vorrichtung nach einem der Ansprüche 1 bis 5, **dadurch gekennzeichnet, daß** das Kupplungselement (80) axial verschiebbar mit dem Reibelement (60) derart gekoppelt ist, daß die relative Verdrehung zwischen beiden begrenzt ist.

7. Vorrichtung nach einem der Ansprüche 1 bis 6, **dadurch gekennzeichnet, daß** das Reibelement (60) einen im wesentlichen hohlen zylindrischen Körper enthält, von dessen Innenfläche (58) mehrere sich axial erstreckende Vorsprünge (72) radial nach innen vorstehen, und daß das Kupplungselement (80) einen im wesentlichen hohlen zylindrischen Körper enthält, an dem mehrere sich axial erstreckende Schlitze (84) ausgebildet sind, die die Vorsprünge (72) des Reibelements (60) zahneingriffsmäßig und axial verschiebbar aufnehmen.

8. Vorrichtung nach einem der Ansprüche 1 bis 7, **dadurch gekennzeichnet, daß** am Gehäuse (36, 130) mehrere sich radial erstreckende Vorsprünge (138) ausgebildet sind, die axial in Richtung des Kupplungselements (80) vorstehen, daß das Kupplungselement (80) einen hohlen, zylindrischen Körper aufweist, in dem mehrere, sich radial erstreckende Ausnehmungen (92) ausgebildet sind, die sich in axialer Richtung öffnen, und daß das Kupplungselement (80) axial in eine verriegelte Stellung, in der die Ausnehmungen (92) zahneingriffsmäßig die Vorsprünge (138) aufnehmen, und in eine entriegelte Stellung, in der Vorsprünge (138) aus den Ausnehmungen (92) ausgekuppelt sind, bewegbar ist.

9. Vorrichtung nach einem der Ansprüche 1 bis 8, **dadurch gekennzeichnet, daß** in dem Gehäuse (36, 130) eine ringförmige Ausnehmung (136) ausgebildet ist, die sich in Richtung des Kupplungselements (80) öffnet, daß die Vorsprünge (138) im Bereich der äußeren Kante der Ausnehmung (136) ringförmig angeordnet sind und daß die Mittel zum Bewegen des Kupplungselements (80) wenigstens eine elektromagnetische Spule (136) enthalten, welche in der ringförmigen Ausnehmung (134) angeordnet ist.

10. Vorrichtung nach einem der Ansprüche 1 bis 9, **dadurch gekennzeichnet, daß** das Nabenelement (50) einen hohlen zylindrischen Körper mit einer inneren kegelförmigen Reibfläche (58) und das Reibelement (60) einen hohlen zylindrischen Körper mit einer äußeren kegelförmigen Reibfläche (62) aufweist, wobei die beiden Reibflächen (58, 62) miteinander in Eingriff stehen.

11. Vorrichtung nach Anspruch 10, **dadurch gekennzeichnet, daß** das Kupplungslement (80), die Rückstellfeder (120) und/oder ein als Abdeckkappe (130) ausgebildeter, die Spule (136) aufnehmender Bereich des Gehäuses aus ferromagnetischem Material bestehen.

12. Vorrichtung nach einem der Ansprüche 1 bis 11, **dadurch gekennzeichnet, daß** das Reibelement (60), das Federelement (110) und das Kupplungselement (80) von dem Nabenelement (50) eingeschlossen werden.

13. Vorrichtung nach einem der Ansprüche 1 bis 12, **dadurch gekennzeichnet, daß** sich die Lenkeingangswelle (12) durch mittlere Ausnehmungen des Reibelements (60), des Federelements (110) und des Kupplungselements (80) erstreckt.

## Claims

1. A steering input device for a vehicle with a steering input shaft (12) which can be turned by an operator relative to a fixed housing (36, 130) and on which a hub element (50) is fixed rotationally fast, with a friction element (60) in frictional engagement with the hub element (50) and with a spring element (110) which biases the friction element (60) and the hub element (50) into frictional engagement with one another, **characterized in that** the friction element (60) usually turns together with the hub element (50) and **in that** the steering input device comprises a movable coupling element (80) which can be brought selectively into interlocking engagement with the friction element (60) and through which the friction element (60) can be coupled to or uncoupled from the housing (36, 130), and comprises means for moving the coupling element (80) between a coupled position and an uncoupled position, wherein the turning of the coupling element (80) and the friction element (60) relative to the housing (36, 130) is limited in the coupled position.

2. A device according to claim 1, **characterized in that** the spring element (110) includes a substantially cylindrical part surrounding the steering input shaft (12) and which is in engagement with the friction element (60).

3. A device according to claim 1 or 2, **characterized in that** a bearing element (100) is provided, mounted rotatably on the steering input shaft (12), and **in that** a radially inner region of the spring element (110) engages on the bearing element (100) and a radially outer region engages on the friction element (60).

4. A device according to any of claims 1 to 3, **characterized in that** the spring element (110) includes at least one annular Belleville spring.

5. A device according to any of claims 1 to 4, **characterized in that** a restoring spring (120) is provided and engages on the coupling element (80) and biases this out of its position coupled to the housing (36, 130).

6. A device according to any of claims 1 to 5, **characterized in that** the coupling element (80) is coupled axially slidably to the friction element (60) in such a way that relative turning between the two is limited.

7. A device according to any of claims 1 to 6, **characterized in that** the friction element (60) includes a substantially hollow cylindrical body, from whose inner surface (58) there project radially inwards a plurality of axially extending projections (72), and **in that** the coupling element (80) includes a substantially hollow cylindrical body in which a plurality of axially extending slots (84) are formed, these slots receiving the projections (72) of the friction element (60) in the manner of engagement of teeth and axially slidably.

8. A device according to any of claims 1 to 7, **characterized in that** a plurality of radially extending projections (138) are formed on the housing (36, 130) and extend axially in the direction of the coupling element (80), **in that** the coupling element (80) comprises a hollow cylindrical body in which a plurality of radially extending recesses (92) are formed, which open in the axial direction, and **in that** the coupling element (80) can be moved axially into a locked position, in which the recesses (92) receive the projections (138) in the manner of engagement of teeth, and into an unlocked position, in which the projections (138) are disengaged from the recesses (92).

9. A device according to any of claims 1 to 8, **characterized in that** an annular recess (136) is formed in the housing (36, 130) and opens in the direction of the coupling element (80), **in that** the projections (138) are arranged in a ring in the region of the outer edge of the recess (136) and **in that** the means for moving the coupling element (80) include at least one electromagnetic coil (136) which is disposed in the annular recess (134).

10. A device according to any of claims 1 to 9, **characterized in that** the hub element (50) comprises a hollow cylindrical body with an internal conical friction surface (58) and the friction element (60) comprises a hollow cylindrical body with an outer conical friction surface (62), wherein the two friction surfaces (58, 62) are in engagement with one another.

11. A device according to claim 10, **characterized in that** the coupling element (80), the restoring spring (120) and/or a region of the housing formed as a cover cap (130) and receiving the coil (136) consist of ferromagnetic material.

12. A device according to any of claims 1 to 11, **characterized in that** the friction element (60), the spring element (110) and the coupling element (80) are enclosed by the hub element (50).

13. A device according to any of claims 1 to 12, **characterized in that** the steering input shaft (12) extends through central recesses of the friction element (60), the spring element (110) and the coupling element (80).

## Revendications

1. Dispositif d'introduction d'un angle de direction pour un véhicule comprenant un arbre d'entrée de direction (12) pouvant être mis en rotation par un opérateur par rapport à un boîtier (36, 130) fixe, sur lequel un élément de moyeu (50) est fixé de façon résistante à la torsion, un élément de frottement (60) en prise par frottement avec l'élément de moyeu (50) et un élément de ressort (110), qui amène l'élément de frottement (60) et l'élément de moyeu (50) en engrènement de frottement entre eux, **caractérisé en ce que** l'élément de frottement (60) tourne habituellement en même temps que l'élément de moyeu (50) et **en ce que** le dispositif d'introduction d'angle de direction présente un élément de couplage (80) mobile, qui peut être amené en option en liaison par conjugaison de forme avec l'élément de frottement (60) et par lequel l'élément de frottement (60) peut être couplé ou découplé avec le boîtier (36, 130'), et présente des moyens pour déplacer l'élément de couplage (60) entre une position couplée et une position découplée, la rotation de l'élément de couplage (80) et de l'élément de frottement (60) étant limitée par rapport au boîtier (36, 130) dans la position couplée.

2. Dispositif selon la revendication 1, **caractérisé en ce que** l'élément de ressort (110) contient une partie sensiblement cylindrique, incluant l'arbre d'entrée de direction (12), qui est en prise avec l'élément de frottement (60).

3. Dispositif selon la revendication 1 ou 2, **caractérisé en ce qu'**il est prévu un élément de palier (100) monté de façon rotative sur l'arbre d'entrée de direction (12) et **en ce que** l'élément de ressort (110) s'appuie avec une zone intérieure au plan radial sur l'élément de palier (100) et avec une zone extérieure au plan radial sur l'élément de frottement (60).

4. Dispositif selon l'une quelconque des revendications 1 à 3, **caractérisé en ce que** l'élément de ressort (110) contient au moins un ressort Belleville de forme annulaire.

5. Dispositif selon l'une quelconque des revendications 1 à 4, **caractérisé en ce qu'**il est prévu un ressort de rappel (120) qui est appliqué sur l'élément de couplage (80) et pousse celui-ci hors de sa position couplée avec le boîtier (36, 130).

6. Dispositif selon l'une quelconque des revendications 1 à 5, **caractérisé en ce que** l'élément de couplage (80) est couplé avec l'élément de frottement (60) de façon coulissante dans le sens axial de telle sorte que la rotation relative entre les deux est limitée.

7. Dispositif selon l'une quelconque des revendications 1 à 6, **caractérisé en ce que** l'élément de frottement (60) contient un corps cylindrique sensiblement creux, de la surface interne (58) duquel des saillies (72) s'étendant dans le sens axial débordent vers l'intérieur sur un plan radial, et **en ce que** l'élément de couplage (80) contient un corps creux et sensiblement cylindrique, sur lequel sont ménagées plusieurs fentes (84) s'étendant axialement, qui reçoivent les saillies (72) de l'élément de frottement (60) par engrènement et de façon coulissante sur un plan axial.

8. Dispositif selon l'une quelconque des revendications 1 à 7, **caractérisé en ce que** sur le boîtier (36, 130) sont réalisées plusieurs saillies (138) s'étendant sur un plan radial, qui débordent axialement en direction de l'élément de couplage (80), **en ce que** l'élément de couplage (80) présente un corps creux et cylindrique, dans lequel sont réalisés plusieurs évidements (92) s'étendant radialement, qui s'ouvrent dans le sens axial, **en ce que** l'élément de couplage (80) est déplaçable axialement dans une position verrouillée, dans laquelle les évidements (92) reçoivent les saillies (138) par engrènement, et dans une position déverrouillée, dans laquelle les saillies (138) sont découplées des évidements (92).

9. Dispositif selon l'une quelconque des revendications 1 à 8, **caractérisé en ce que** dans le boîtier (36, 130) est aménagé un évidèment (136) de forme annulaire, qui s'ouvre en direction de l'élément de couplage (80), **en ce que** les saillies (138) sont disposées en forme d'anneau dans la zone de l'arête extérieure de l'évidement (136) et **en ce que** les moyens pour déplacer l'élément de couplage (80) contiennent au moins une bobine (136) électromagnétique, laquelle est disposée dans l'évidement (134) de forme annulaire.

10. Dispositif selon l'une quelconque des revendications 1 à 9, **caractérisé en ce que** l'élément de moyeu (50) présente un corps cylindrique creux avec une surface de frottement (58) interne et de forme conique et l'élément de frottement (60) un corps cylindrique creux avec une surface de frottement (62) extérieure et conique, les deux surfaces de frottement (58, 62) étant en prise l'une avec l'autre.

11. Dispositif selon la revendication 10, **caractérisé en ce que** l'élément de couplage (80), le ressort de rappel (120) et/ou une zone du boîtier, conçue comme capot de recouvrement (130) et recevant la bobine (136) sont à base de matériau ferromagnétique.

12. Dispositif selon l'une quelconque des revendications 1 à 11, **caractérisé en ce que** l'élément de frottement (60), l'élément de ressort (110) et l'élément de couplage (80) sont enfermés par l'élément de moyeu (50).

13. Dispositif selon l'une quelconque des revendications 1 à 12, **caractérisé en ce que** l'arbre d'entrée de direction (12) s'étend à travers des évidements centraux de l'élément de frottement (60), de l'élément de ressort (110) et de l'élément de couplage (80).
